# EUROPÄISCHE PATENTSCHRIFT

(11) **EP 3 811 735 B1**
(45) Veröffentlichungstag und Bekanntmachung des Hinweises auf die Patenterteilung: **07.08.2024**
(21) Anmeldenummer: 19733150.7
(22) Anmeldetag: 07.06.2019
(51) Int. Cl.: H05B 6/12

(54) **KOCHFELDVORRICHTUNG**
COOKING PLATE
PLAQUE DE CUISSON

(30) Priorität: 21.06.2018 ES 201830625
(43) Veröffentlichungstag der Anmeldung: 28.04.2021
(73) Patentinhaber: BSH Hausgeräte GmbH, 81739 München (DE)
(72) Erfinder: FRANCO GUTIERREZ, Carlos, 50017 Zaragoza (ES); MARZO ALVAREZ, Teresa Del Carmen, 50012 Zaragoza (ES); PAESA GARCIA, David, 50015 Zaragoza (ES); PARRA BORDERÍAS, Maria, 50006 Zaragoza (ES); RODRIGUEZ LARROSA, Agostina, 50011 Zaragoza (ES); VILLANUEVA VALERO, Beatriz, 50011 Zaragoza (ES)
(86) Internationale Anmeldenummer: PCT/IB2019/054753
(87) Internationale Veröffentlichungsnummer: WO 2019/243939

(56) Entgegenhaltungen:
- EP-A1- 2 991 444
- FR-A1- 3 033 995
- US-A1- 2004 149 736
- US-A1- 2007 080 158

## Beschreibung

Die Erfindung betrifft eine Kochvorrichtung nach dem Oberbegriff des Anspruchs 1.

Aus der internationalen Patentanmeldung WO 01/19141 A1 ist bereits eine Kochvorrichtung bekannt, welche eine Informationseinheit mit einer Informationsspeichereinheit aufweist, In der Informationsspeichereinheit ist eine intrinsische Aufstelleinheitenkenngröße einer Aufstelleinheit, welche als eine Pfanne ausgebildet ist, gespeichert. Die in der Informationsspeichereinheit gespeicherte intrinsische Aufstelleinheitenkenngröße der Aufstelleinheit ist ein Typ der Aufstelleinheit. Die Informationseinheit ist unlöslich und fest in einem Boden der Aufstelleinheit integriert. Der Boden der Aufstelleinheit definiert einen Heizbereich der Aufstelleinheit, weshalb die Informationseinheit in dem Heizbereich der Aufstelleinheit angeordnet ist.

Zudem ist aus der Patentanmeldung FR 3 033 995 A1 bereits eine Kochvorrichtung nach dem Oberbegriff des Anspruchs 1 bekannt, wobei eine Informationseinheit in einem Griff einer Aufstelleinheit anordenbar ist.

Ferner offenbart die Patentanmeldung US 2004/149736 A1 eine als RFID-Tag ausgebildete Informationseinheit, welche fest in einer Aufstelleinheit integriert und eingebaut ist.

Außerdem ist aus der Patentanmeldung US 2007/080158 A1 eine Kochvorrichtung mit einer Temperaturerfassungseinheit bekannt, welche dazu vorgesehen ist, eine Temperatur einer Aufstelleinheit mit einer hohen Genauigkeit zu erfassen.

Darüber hinaus offenbart die Patentanmeldung EP 2 991 444 A1 ein Verfahren zur Regelung einer Temperatur eines Garguts mittels einer Temperaturmesseinrichtung.

Die Aufgabe der Erfindung besteht insbesondere darin, eine gattungsgemäße Vorrichtung mit verbesserten Eigenschaften hinsichtlich einer Flexibilität bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Kochvorrichtung, insbesondere von einer Induktionskochvorrichtung, mit zumindest einer Informationseinheit, welche zumindest eine Informationsspeichereinheit aufweist, in welcher zumindest eine intrinsische Aufstelleinheitenkenngröße zumindest einer Aufstelleinheit, die zu einem Aufstellen auf zumindest einer Kochfläche zum Zweck einer Beheizung vorgesehen ist, speicherbar ist, wobei die Informationseinheit zum Zweck einer insbesondere drahtlosen Kommunikation mit zumindest einer Kommunikationseinheit zu einer Anordnung an der Aufstelleinheit außerhalb eines Heizbereichs der Aufstelleinheit vorgesehen ist.

Durch eine derartige Ausgestaltung kann insbesondere eine hohe Flexibilität erreicht werden. Durch die Anordnung der Informationseinheit außerhalb des Heizbereichs der Aufstelleinheit kann insbesondere eine geringe thermische Belastung der Informationseinheit und/oder eine langlebige Ausgestaltung ermöglicht werden. Insbesondere durch die in der Informationsspeichereinheit speicherbare intrinsische Aufstelleinheitenkenngröße kann vorteilhaft ein Garprozess und/oder ein Garergebnis optimiert werden, und zwar insbesondere für eine beliebig ausgestaltete Aufstelleinheit. Da insbesondere jeder Bediener unterschiedliche Erwartungen und/oder Bedürfnisse und/oder Erfahrungen aufweist, kann, insbesondere durch Speicherung der intrinsischen Aufstelleinheitenkenngröße in der Informationsspeichereinheit, insbesondere speziell und/oder individuell auf den Bediener eingegangen werden, wodurch vorteilhaft ein hoher Bedienkomfort und/oder eine hohe Zufriedenheit eines Bedieners ermöglicht werden kann.

Unter einer "Kochvorrichtung", insbesondere unter einer "Induktionskochvorrichtung", soll insbesondere eine Vorrichtung verstanden werden, welche insbesondere zu einem Gebrauch und/oder zu einer Verwendung mit zumindest einem Kochfeld und/oder mit zumindest einem Kochfeldobjekt und/oder mit zumindest einem Kochfeldzubehörobjekt vorgesehen ist. Unter einem "Kochfeldobjekt" soll insbesondere zumindest ein Teil, insbesondere eine Unterbaugruppe, eines Kochfelds, insbesondere eines Induktionskochfelds, verstanden werden. Unter einem "Kochfeldzubehörobjekt" soll insbesondere ein Objekt verstanden werden, welches insbesondere zu einem Gebrauch und/oder zu einer Verwendung mit zumindest einem Kochfeld vorgesehen ist und/oder welches insbesondere als ein Zubehör für zumindest ein Kochfeld ausgebildet ist.

Zumindest ein Kochfeldobjekt könnte beispielsweise zumindest eine Steuereinheit und/oder zumindest eine Bedienerschnittstelle und/oder zumindest eine Kochfeldgehäuseeinheit und/oder zumindest eine Kochfeldheizeinheit und/oder zumindest ein Wechselrichter und/oder zumindest eine als Kochfeldplatte ausgebildete Aufstellplatte und/oder zumindest eine Abzugseinheit und/oder zumindest eine Kochfeldelektronik sein. Beispielsweise könnte zumindest ein Kochfeldzubehörobjekt eine Sensoreinheit zur externen Messung einer Temperatur eines Gargeschirrs und/oder eines Garguts und/oder einer Aufstelleinheit sein. Zumindest ein Kochfeldzubehörobjekt könnte beispielsweise alternativ oder zusätzlich ein Gargeschirr und/oder eine Aufstelleinheit und/oder ein Kontaktmodul sein, welches insbesondere zu einer Anordnung an dem Gargeschirr und/oder an der Aufstelleinheit vorgesehen sein könnte. Insbesondere könnte zumindest ein Kochfeldzubehörobjekt alternativ oder zusätzlich ein Adapter sein, welcher insbesondere zu einer Kopplung mit zumindest einem Küchenobjekt und insbesondere zu einem Aufstellen und/oder Auflegen auf der Aufstellplatte vorgesehen sein könnte.

Vorzugsweise ist die Kochvorrichtung eine Vorrichtung, welche zu einer, insbesondere werkzeuglos lösbaren Anordnung an zumindest einer Aufstelleinheit vorgesehen ist. Die Kochvorrichtung ist insbesondere zu einer Kopplung mit zumindest einer Aufstelleinheit vorgesehen. In wenigstens einem Betriebszustand ist die Kochvorrichtung insbesondere kraftschlüssig und/oder formschlüssig und/oder stoffschlüssig mit der Aufstelleinheit verbunden und insbesondere an der Aufstelleinheit angeordnet.

Unter einer "Informationseinheit" soll insbesondere eine Einheit verstanden werden, welche in wenigstens einem Betriebszustand insbesondere zu einer Speicherung zumindest einer, insbesondere zumindest eine Information aufweisenden Aufstelleinheitenkenngröße vorgesehen ist und/oder welche in wenigstens einem Betriebszustand, insbesondere mittels der Aufstelleinheitenkenngröße, zu einer Bereitstellung zumindest einer, insbesondere zumindest eine Information aufweisenden Aufstelleinheitenkenngröße vorgesehen ist.

Unter der Wendung, dass zumindest eine Kenngröße in der Informationsspeichereinheit der Informationseinheit "speicherbar" ist, soll insbesondere verstanden werden, dass die Kenngröße in wenigstens einem Betriebszustand, insbesondere manuell und/oder durch zumindest eine Bedieneingabe mittels der Bedienerschnittstelle und/oder durch Empfang von zumindest einer externen Elektronikeinheit, vorteilhaft aktiv, an die Informationseinheit, insbesondere an die Informationsspeichereinheit, übertragen und insbesondere in der Informationsspeichereinheit gespeichert werden kann und/oder dass die Kenngröße in der Informationsspeichereinheit vordefiniert und/oder vorgegeben und/oder voreingestellt gespeichert ist. Die vordefinierte und/oder vorgegebene und/oder voreingestellte Kenngröße ist insbesondere werkseitig, beispielsweise von einem Monteur und/oder von einem Techniker und/oder im Zuge einer Herstellung der Informationseinheit, in der Informationsspeichereinheit gespeichert, und zwar insbesondere vor einem Start wenigstens eines Betriebszustands. Der Monteur und/oder der Techniker unterscheidet sich insbesondere von einem Bediener. Insbesondere ist zumindest eine Kenngröße in wenigstens einem Betriebszustand in der Informationsspeichereinheit speicherbar und/oder hinterlegbar, und zwar insbesondere manuell und/oder durch zumindest eine Bedieneingabe mittels der Bedienerschnittstelle und/oder durch Empfang von zumindest einer externen Elektronikeinheit. Die externe Elektronikeinheit könnte beispielsweise ein Mobilgerät und/oder ein Netzwerk sein. Das Mobilgerät könnte beispielsweise ein Handy und/oder ein Tablet und/oder ein Laptop und/oder ein Mobiltelefon sein. Das Netzwerk könnte beispielsweise ein Haushaltsnetzwerk und/oder ein globales Netzwerk und/oder ein regionales Netzwerk und/oder ein Netzwerk innerhalb eines Gebäudes sein.

Insbesondere alternativ oder zusätzlich, insbesondere zu der speicherbaren Kenngröße, könnte insbesondere zumindest eine Kenngröße voreingestellt und/oder werkseitig in der Informationsspeichereinheit gespeichert sein. Beispielsweise könnte zumindest eine Kenngröße werkseitig und/oder voreingestellt und/oder vordefiniert in der Informationsspeichereinheit gespeichert sein. Unter einer "Bedieneingabe" soll insbesondere eine optische und/oder akustische Eingabe mittels der Bedienerschnittstelle insbesondere durch einen Bediener verstanden werden.

Unter einer "intrinsischen" Aufstelleinheitenkenngröße einer Aufstelleinheit soll insbesondere eine Aufstelleinheitenkenngröße verstanden werden, welche der Aufstelleinheit innewohnend ist und/oder die Aufstelleinheit charakterisiert, und zwar insbesondere unabhängig von einem Betriebszustand und/oder von einer Aufstellposition der Aufstelleinheit. Unter "intrinsisch" soll insbesondere innewohnend und/oder von sich selbst heraus und/oder von sich aus aufweisend und/oder ohne äußeren Einfluss aufweisend und/oder ohne äußere Beeinflussung aufweisend verstanden werden.

Unter einer "Aufstelleinheitenkenngröße" einer Aufstelleinheit soll insbesondere eine Kenngröße verstanden werden, welche die Aufstelleinheit kennzeichnet und/oder welche der Aufstelleinheit zugeordnet ist. Insbesondere unterscheidet sich die Aufstelleinheitenkenngröße von einer Kenngröße, welche insbesondere von wenigstens einem Betriebszustand und/oder von wenigstens einer Aufstellposition abhängig ist. Die Aufstelleinheitenkenngröße unterscheidet sich insbesondere von einer Temperatur und/oder von einem Garzustand und/oder von einer Aufstellposition und/oder von einer Anzahl an Kochfeldheizeinheiten, welche die Aufstelleinheit beheizen, und/oder von einer, insbesondere der Aufstelleinheit zugeordneten Heizzone.

Beispielsweise könnte zumindest eine Aufstelleinheitenkenngröße eine Geometriekenngröße sein. Die Geometriekenngröße könnte beispielsweise eine Form und/oder eine Gestalt und/oder eine Höhe und/oder ein Durchmesser und/oder ein Gewicht sein. Alternativ oder zusätzlich könnte zumindest eine Aufstelleinheitenkenngröße eine Tauglichkeitskenngröße sein. Die Tauglichkeitskenngröße könnte beispielsweise ein Material, insbesondere eines zu beheizenden Heizbereichs der Aufstelleinheit, und/oder ein Typ und/oder eine Farbe, insbesondere eines zu beheizenden Heizbereichs der Aufstelleinheit, sein. Eine Tauglichkeitskenngröße, welche ein Typ ist, könnte beispielsweise ein Topf und/oder eine Pfanne und/oder ein Dampfgargerät und/oder ein WOK und/oder eine TeppanYakiPlatte und/oder ein Röster und/oder ein Grillgerät sein.

Insbesondere könnte zumindest eine Aufstelleinheitenkenngröße eine Gebrauchsanweisung und/oder ein bevorzugter Garprozess und/oder ein bevorzugter Kochprozess und/oder eine bevorzugte Garart und/oder eine bevorzugte Kochart sein. Zumindest eine Aufstelleinheitenkenngröße könnte insbesondere eine Eignung der Aufstelleinheit für zumindest eine Sensorfunktion und/oder für zumindest einen Garprozess und/oder für zumindest einen Kochprozess und/oder für zumindest eine Garart und/oder für zumindest eine Kochart sein. Insbesondere könnte zumindest eine Aufstelleinheitenkenngröße ein, insbesondere vordefiniert gespeichertes Ergebnis, einer Kalibration der Aufstelleinheit mit zumindest einer Kochfeldheizeinheit sein.

Zumindest eine Aufstelleinheitenkenngröße könnte insbesondere zumindest ein genereller und/oder allgemeiner Hinweis und/oder zumindest eine generelle und/oder allgemeine Information in Bezug auf die Aufstelleinheit sein, wie beispielsweise zumindest eine Information und/oder zumindest ein Hinweise bezüglich einer Garart und/oder bezüglich einer Kochart und/oder bezüglich einer Eignung zu einer Anordnung zumindest einer Kommunikationseinheit und/oder bezüglich einer Reinigung der Aufstelleinheit und/oder bezüglich einer Instandhaltung der Aufstelleinheit.

Unter einer "Aufstelleinheit" soll insbesondere eine Einheit verstanden werden, welche zu einem Aufstellen und/oder Auflegen auf einer Aufstellplatte vorgesehen ist, und zwar insbesondere zum Zweck einer Beheizung zumindest eines Teils der Aufstelleinheit. Die Aufstelleinheit könnte beispielsweise zumindest ein Kochgeschirrelement und/oder zumindest ein Gargeschirr aufweisen. Alternativ oder zusätzlich könnte die Aufstelleinheit zumindest eine Unterlegeinheit aufweisen, welche insbesondere zu einem Aufstellen zumindest eines Kochgeschirrelements, insbesondere des Kochgeschirrelements, und/oder zumindest eines Gargeschirrs, insbesondere des Gargeschirrs, vorgesehen sein könnte. Die Unterlegeinheit könnte beispielsweise in wenigstens einem Betriebszustand zu einer Anordnung zwischen einem zu erhitzenden Kochgeschirrelement und/oder Gargeschirr der Aufstelleinheit und der Aufstellplatte vorgesehen sein. Insbesondere könnte zumindest ein Objekt der Aufstelleinheit, insbesondere mehrere Objekte der Aufstelleinheit und vorteilhaft alle Objekte der Aufstelleinheit wenigstens teilweise und vorteilhaft wenigstens zu einem Großteil in der Unterlegeinheit integriert sein.

Alternativ, insbesondere zu der Ausgestaltung, in welcher die Aufstelleinheit zumindest eine Unterlegeinheit und insbesondere zumindest ein Kochgeschirrelement und/oder zumindest ein Gargeschirr aufweist, könnte die Aufstelleinheit beispielsweise zumindest eine Gehäuseeinheit aufweisen, welche insbesondere als eine Aufstellaußengehäuseeinheit ausgebildet sein und insbesondere ein Außengehäuse der Aufstelleinheit wenigstens zu einem Großteil ausbilden könnte. Insbesondere könnte zumindest ein Objekt der Aufstelleinheit, insbesondere mehrere Objekte der Aufstelleinheit und vorteilhaft alle Objekte der Aufstelleinheit wenigstens teilweise und vorteilhaft wenigstens zu einem Großteil in der Gehäuseeinheit integriert sein.

Das Objekt der Aufstelleinheit könnte insbesondere zumindest ein elektrisches und/oder elektronisches Objekt sein. Zumindest ein Objekt der Aufstelleinheit könnte beispielsweise eine Aufstellbedienerschnittstelle und/oder eine Aufstellsteuereinheit und/oder eine Aufstellsensoreinheit und/oder eine Aufstellsendeeinheit sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Insbesondere weist ein die Kochvorrichtung aufweisendes Kochsystem zumindest eine Aufstellplatte auf. Die Aufstellplatte ist insbesondere zu einem Aufstellen und/oder zu einem Auflegen zumindest einer Aufstelleinheit und/oder zu einem Auflegen zumindest eines Garguts vorgesehen. Unter einer "Aufstellplatte" soll insbesondere zumindest eine insbesondere plattenartige Einheit verstanden werden, welche zu einem Aufstellen zumindest einer Aufstelleinheit und/oder zu einem Auflegen zumindest einer Aufstelleinheit und/oder zu einem Aufstellen zumindest eines Gargeschirrs und/oder zu einem Auflegen zumindest eines Garguts zum Zweck der Beheizung vorgesehen ist. Die Aufstellplatte könnte beispielsweise als ein Teilbereich zumindest einer Arbeitsplatte, insbesondere zumindest einer Küchenarbeitsplatte, insbesondere des Kochsystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer insbesondere als Außengehäuseeinheit ausgebildeten Kochfeldgehäuseeinheit, mit welcher die als Kochfeldplatte ausgebildete Aufstellplatte in wenigstens einem montierten Zustand insbesondere verbunden sein könnte, zumindest ein Kochfeldaußengehäuse wenigstens zu einem Großteil ausbilden. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Metall und/oder aus Kunststoff und/oder aus Keramik gebildet sein.

Die Aufstellplatte definiert und/oder begrenzt zumindest eine Kochfläche, welche insbesondere zu einem Aufstellen zumindest einer Aufstelleinheit und/oder zu einem Auflegen zumindest einer Aufstelleinheit und/oder zu einem Aufstellen zumindest eines Gargeschirrs und/oder zu einem Auflegen zumindest eines Garguts zum Zweck der Beheizung vorgesehen ist. Insbesondere ist die Kochfläche als ein Oberflächenteilbereich der Aufstellplatte ausgebildet, unterhalb welchem in einer Einbaulage zumindest eine Kochfeldheizeinheit angeordnet ist. Insbesondere weist das Kochsystem die Kochfeldheizeinheit auf, welche insbesondere als eine Induktionskochfeldheizeinheit ausgebildet ist.

Die Kommunikationseinheit ist insbesondere Teil des Kochsystems. Insbesondere weist das Kochsystem zumindest eine, insbesondere die Kommunikationseinheit auf. Unter einer "Kommunikationseinheit" soll insbesondere eine Einheit verstanden werden, welche insbesondere zumindest eine Empfangseinheit, die insbesondere zu einem Empfang zumindest einer Information und/oder zumindest eines Signals von zumindest einer weiteren Einheit vorgesehen ist, und insbesondere zumindest eine Sendeeinheit, die insbesondere zu einer Übertragung zumindest einer Information und/oder zumindest eines Signals an zumindest eine weitere Einheit vorgesehen ist, aufweist und welche, insbesondere mittels der Empfangseinheit und/oder der Sendeeinheit, insbesondere zu einer Kommunikation mit zumindest einer weiteren Einheit vorgesehen ist. Insbesondere ist die Kommunikationseinheit, insbesondere mittels der Empfangseinheit und/oder der Sendeeinheit, insbesondere zu einem Austausch zumindest einer Information und/oder zumindest eines Signals mit zumindest einer weiteren Einheit und/oder zu einer Interaktion mit zumindest einer weiteren Einheit vorgesehen. Unter einer "Kommunikation" soll insbesondere ein Austausch und/oder eine Interaktion und/oder ein Kontakt und/oder eine Verständigung verstanden werden.

Das Kochsystem weist insbesondere zumindest eine, insbesondere die weitere Einheit auf. Zumindest eine weitere Einheit könnte beispielsweise ein Mobilgerät und/oder ein Kochfeld und/oder ein Kontaktmodul und/oder ein Netzwerk sein. Alternativ oder zusätzlich könnte zumindest eine weitere Einheit insbesondere zumindest eine Applikation, insbesondere zumindest eine mobile Applikation, sein.

Unter der Wendung, dass ein Objekt zu einer "Anordnung an zumindest einer Aufstelleinheit" vorgesehen ist, soll insbesondere verstanden werden, dass das Objekt in wenigstens einem Betriebszustand an zumindest einer Wand, insbesondere einer Seitenwand, der Aufstelleinheit und/oder an zumindest einem Deckel der Aufstelleinheit und/oder innerhalb der Aufstelleinheit und/oder an zumindest einem Griffelement der Aufstelleinheit angeordnet ist. Insbesondere ist das an der Wand der Aufstelleinheit und/oder an dem Deckel der Aufstelleinheit angeordnete Objekt in einem direkten Kontakt mit der Aufstelleinheit angeordnet. Beispielsweise könnte das Objekt mit zumindest einem Ansaugelement und/oder mit zumindest einer mechanischen Verbindung mit der Aufstelleinheit und/oder mit zumindest einem Magneten in einem direkten Kontakt mit der Aufstelleinheit angeordnet sein. Insbesondere ist das innerhalb der Aufstelleinheit angeordnete Objekt in einem von der Aufstelleinheit ausgebildeten Aufnahmeraum angeordnet und insbesondere auf zumindest einer Ebene über einen Winkelbereich von mindestens 180°, vorteilhaft von mindestens 270° und bevorzugt von mindestens 330° von der Aufstelleinheit umgeben.

Insbesondere ist die Informationseinheit und/oder die Kommunikationseinheit dazu vorgesehen, zumindest in einem Betriebszustand abnehmbar, insbesondere wiederverwendbar, an der Aufstelleinheit, insbesondere an zumindest einer Seitenwand der Aufstelleinheit, angeordnet zu sein.

Insbesondere könnte die Informationseinheit und/oder die Kommunikationseinheit wenigstens zu einem Großteil aus Kunststoff, insbesondere aus Kunststoff mit geringer Wärmeleitfähigkeit, ausgebildet sein. Beispielsweise könnte die Informationseinheit und/oder die Kommunikationseinheit wenigstens zu einem Großteil aus Silikon mit geringer Wärmeleitfähigkeit ausgebildet sein. Insbesondere könnte die Informationseinheit und/oder die Kommunikationseinheit bei einer senkrechten Betrachtung auf eine Haupterstreckungsebene der Informationseinheit und/oder der Kommunikationseinheit ovalförmig, beispielsweise ellipsenförmig und vorteilhaft kreisförmig, ausgebildet sein. Alternativ oder zusätzlich könnte die Informationseinheit und/oder die Kommunikationseinheit bandförmig und/oder streifenförmig ausgebildet sein. Unter einer "geringen" Wärmeleitfähigkeit soll insbesondere eine Wärmeleitfähigkeit mit einem Wert von maximal 10 W/(m•K), insbesondere von maximal 1 W/(m•K), vorteilhaft von weniger als 0,5 W/(m•K), besonders vorteilhaft von maximal 0,2 W/(m•K) und vorzugsweise von maximal 0,1 W/(m•K) verstanden werden.

Insbesondere weist die Informationseinheit und/oder die Kommunikationseinheit eine Dicke von maximal 40 mm, insbesondere von maximal 30 mm und vorteilhaft von maximal 20 mm auf. Insbesondere weist die Informationseinheit und/oder die Kommunikationseinheit bei einer senkrechten Betrachtung auf eine Haupterstreckungsebene der Informationseinheit und/oder der Kommunikationseinheit einen Durchmesser von maximal 40 mm, insbesondere von maximal 35 mm und vorteilhaft von maximal 30 mm auf. Insbesondere weist die Informationseinheit und/oder die Kommunikationseinheit bei einer senkrechten Betrachtung auf eine Haupterstreckungsebene der Informationseinheit und/oder der Kommunikationseinheit einen Durchmesser von mindestens 5 mm, insbesondere von mindestens 7 mm und vorteilhaft von mindestens 10 mm auf. Unter einer "Dicke" eines Objekts soll insbesondere eine kürzeste Erstreckung eines kleinsten gedachten geometrischen Quaders verstanden werden, welcher das Objekt gerade noch umgibt.

Unter einem "Heizbereich" einer Aufstelleinheit soll insbesondere ein Teilbereich der Aufstelleinheit verstanden werden, welcher zu einer Beheizung vorgesehen ist und/oder welcher insbesondere dazu vorgesehen ist, in wenigstens einem Betriebszustand Heizenergie zu empfangen und insbesondere empfangene Heizenergie wenigstens teilweise und vorteilhaft wenigstens zu einem Großteil, insbesondere an zumindest ein innerhalb der Aufstelleinheit angeordnetes Lebensmittel, weiterzuleiten. Insbesondere ist die Aufstelleinheit zumindest in dem Heizbereich wenigstens zu einem Großteil aus zumindest einem ferromagnetischen Material und/oder aus zumindest einem, insbesondere induktiv, beheizbaren Material ausgebildet. In wenigstens einem Betriebszustand ist der Heizbereich insbesondere als ein der Kochfeldheizeinheit und/oder der Aufstellplatte zugewandter Teilbereich der Aufstelleinheit ausbildet und/oder wenigstens zu einem Großteil zwischen zumindest einem Lebensmittelaufnahmeraum der Aufstelleinheit und der Kochfeldheizeinheit und/oder der Aufstellplatte angeordnet.

Unter der Wendung, dass ein Objekt zu einer Anordnung "außerhalb" eines Bereichs einer Einheit vorgesehen ist, soll insbesondere verstanden werden, dass das Objekt in wenigstens einem Betriebszustand beabstandet zu dem Bereich des Objekts angeordnet ist und/oder dass das Objekt in wenigstens einem Betriebszustand in einem von dem Bereich verschiedenen weiteren Bereich des Objekts angeordnet ist. Das Objekt ist insbesondere die Informationseinheit und/oder die Kommunikationseinheit.

Insbesondere ist das Objekt, insbesondere die Informationseinheit und/oder die Kommunikationseinheit, in zumindest einer Vertikalrichtung, welche insbesondere senkrecht zu zumindest einer Haupterstreckungsebene der Aufstellplatte ausgerichtet ist, beabstandet zu dem Heizbereich der Aufstelleinheit angeordnet. Bezüglich der Vertikalrichtung ist das Objekt, insbesondere die Informationseinheit und/oder die Kommunikationseinheit, in wenigstens einem Betriebszustand insbesondere um eine Strecke von mindestens 1 cm, insbesondere von mindestens 2 cm, vorteilhaft von mindestens 3 cm, besonders vorteilhaft von mindestens 5 cm, vorzugsweise von mindestens 7 cm und besonders bevorzugt von mindestens 10 cm beabstandet zu dem Heizbereich der Aufstelleinheit angeordnet. Insbesondere ist das Objekt, insbesondere die Informationseinheit und/oder die Kommunikationseinheit, bezüglich der Vertikalrichtung in wenigstens einem Betriebszustand insbesondere um eine Strecke von mindestens 2-mal, insbesondere von mindestens 4-mal, vorteilhaft von mindestens 6-mal, besonders vorteilhaft von mindestens 10-mal, vorzugsweise von mindestens 15-mal und besonders bevorzugt von mindestens 20-mal einer Materialstärke des Bodens und/oder des Heizbereichs der Aufstelleinheit beabstandet zu dem Heizbereich der Aufstelleinheit angeordnet. Insbesondere ist das Objekt, insbesondere die Informationseinheit und/oder die Kommunikationseinheit, in zumindest einer Ebene, welche insbesondere senkrecht zu zumindest einer Haupterstreckungsebene der Aufstellplatte ausgerichtet ist, überlappungsfrei mit dem Boden und/oder mit dem Heizbereich der Aufstelleinheit angeordnet.

Insbesondere ist das Objekt, insbesondere die Informationseinheit und/oder die Kommunikationseinheit, in zumindest einer Horizontalrichtung, welche insbesondere parallel zu zumindest einer Haupterstreckungsebene der Aufstellplatte ausgerichtet ist, überlappungsfrei mit dem Heizbereich der Aufstelleinheit angeordnet. Beispielsweise könnte das Objekt, insbesondere die Informationseinheit und/oder die Kommunikationseinheit, bezüglich der Horizontalrichtung, insbesondere direkt, an den Heizbereich der Aufstelleinheit angrenzen. Alternativ oder zusätzlich könnte das Objekt, insbesondere die Informationseinheit und/oder die Kommunikationseinheit, bezüglich der Horizontalrichtung insbesondere beabstandet zu dem Heizbereich der Aufstelleinheit angeordnet sein. Ein Abstand zwischen dem Objekt, insbesondere der Informationseinheit und/oder der Kommunikationseinheit, und dem Heizbereich der Aufstelleinheit könnte beispielsweise durch zumindest eine Materialstärke zumindest einer Seitenwand der Aufstelleinheit definiert und/oder vorgegeben sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnte die Informationseinheit zu einer lediglich mittels Einsatz von Werkzeug lösbaren Anordnung an der Aufstelleinheit und/oder zu einer stoffschlüssigen Anordnung an der Aufstelleinheit und/oder zu einer Integration in die Aufstelleinheit vorgesehen sein. Besonders vorteilhaft ist die Informationseinheit zu einer kraftschlüssigen und/oder formschlüssigen Anordnung an der Aufstelleinheit vorgesehen. Vorzugsweise ist die Informationseinheit zu einer werkzeuglos lösbaren Anordnung an der Aufstelleinheit vorgesehen. Dadurch kann insbesondere eine hohe Flexibilität erzielt werden, da die Informationseinheit insbesondere an einer insbesondere beliebigen Stelle der Aufstelleinheit außerhalb des Heizbereichs der Aufstelleinheit angeordnet werden kann.

Die Informationseinheit könnte beispielsweise zu einer Anordnung zumindest an einem Griffelement der Aufstelleinheit und/oder an zumindest einem Deckel der Aufstelleinheit vorgesehen sein. Die Informationseinheit ist zu einer Anordnung zumindest an einer Seitenwand der Aufstelleinheit vorgesehen. Insbesondere weist die Informationseinheit an einem in wenigstens einem Betriebszustand der Seitenwand zugewandten Teilbereich wenigstens abschnittsweise eine an eine Formgebung der Seitenwand angepasste Gestalt auf. Unter einer "Seitenwand" einer Aufstelleinheit soll insbesondere eine Wandung verstanden werden, welche eine äußere Begrenzung der Aufstelleinheit definiert und/oder ausbildet. Insbesondere überragt die Seitenwand der Aufstelleinheit in zumindest einer Richtung, die senkrecht zu einer Haupterstreckungsebene eines Bodens der Aufstelleinheit ausgerichtet ist, den Boden der Aufstelleinheit um zumindest eine Erstreckung von mindestens 2-mal, insbesondere von mindestens 4-mal, vorteilhaft von mindestens 6-mal, besonders vorteilhaft von mindestens 10-mal, vorzugsweise von mindestens 15-mal und besonders bevorzugt von mindestens 20-mal einer Materialstärke des Bodens und/oder der Seitenwand. Die Seitenwand ist insbesondere winklig zu dem Boden der Aufstelleinheit ausgerichtet. Insbesondere schließt die Seitenwand in zumindest einer Querschnittsebene, welche insbesondere wenigstens im Wesentlichen senkrecht zu einer Haupterstreckungsebene des Bodens der Aufstelleinheit ausgerichtet ist, an zumindest eine insbesondere seitliche und/oder äußere Kante des Bodens in der Querschnittsebene an. Unter einem "Boden" einer Aufstelleinheit soll insbesondere eine Wandung verstanden werden, welche insbesondere in wenigstens einem Betriebszustand, in welchem die Aufstelleinheit insbesondere auf der Aufstellplatte aufgestellt ist, einen der Aufstellplatte zugewandten und/oder nächstgelegenen Teilbereich der Aufstelleinheit definiert und/oder ausbildet. Der Boden der Aufstelleinheit ist insbesondere in wenigstens einem Betriebszustand, in welchem die Aufstelleinheit insbesondere auf der Aufstellplatte aufgestellt ist, wenigstens abschnittsweise in Kontakt mit der Aufstellplatte angeordnet. Dadurch kann insbesondere eine einfache Zugänglichkeit der Informationseinheit in einem Betriebszustand ermöglicht werden, wodurch insbesondere eine ungestörte Kommunikation der Informationseinheit mit der Kommunikationseinheit bereitgestellt werden kann, und zwar insbesondere unabhängig von einem Betriebszustand.

Weiterhin wird vorgeschlagen, dass die Informationseinheit an zumindest einer der Seitenwand in wenigstens einem Betriebszustand zugewandten Oberfläche wenigstens abschnittsweise eine konkavförmige Gestalt aufweist. Unter "konkav" soll insbesondere nach innen gewölbt verstanden werden. Unter der Wendung, dass die Oberfläche der Informationseinheit "wenigstens abschnittsweise" eine bestimmte Gestalt aufweist, soll insbesondere verstanden werden, dass die Oberfläche der Informationseinheit zumindest einen Abschnitt aufweist, welcher die bestimmte Gestalt aufweist, und insbesondere zusätzlich zu dem Abschnitt zumindest einen weiteren Abschnitt aufweisen könnte, welche eine von der bestimmten Gestalt verschiedene Gestalt aufweisen könnte. Beispielsweise könnte die Oberfläche der Informationseinheit in dem weiteren Abschnitt eine ebene Gestalt und/oder eine konvexe Gestalt aufweisen. Insbesondere ist der Abschnitt der Oberfläche der Informationseinheit, welcher insbesondere der Seitenwand in dem Betriebszustand zugewandt ist und welcher insbesondere die konkave Gestalt aufweist, wenigstens teilweise, vorteilhaft wenigstens zu einem Großteil und vorzugsweise vollständig innerhalb eines kleinsten gedachten geometrischen Quaders angeordnet, welcher die Informationseinheit gerade noch vollständig umschließt. Der Abschnitt der Oberfläche der Informationseinheit, welcher insbesondere der Seitenwand in dem Betriebszustand zugewandt ist und welcher insbesondere die konkave Gestalt aufweist, ist insbesondere in Richtung eines Mittelpunkts und/oder geometrischen Schwerpunkts der Informationseinheit gewölbt. Dadurch kann die Informationseinheit insbesondere optimal und/oder formschlüssig an der Seitenwand angeordnet werden, wodurch insbesondere eine sichere Verbindung zwischen der Seitenwand und der Informationseinheit ermöglicht werden und/oder ein Auftreten von Ecken und Kanten, welche insbesondere eine hohe Verletzungsgefahr bergen könnten, vermieden werden.

Beispielsweise könnte die Informationseinheit zu einer Kommunikation mit der Kommunikationseinheit mittels elektromagnetischer Strahlung und/oder mittels Funk vorgesehen sein. Alternativ oder zusätzlich könnte die Informationseinheit insbesondere zu einer induktiven Kommunikation mit der Kommunikationseinheit vorgesehen sein. Die Informationseinheit könnte insbesondere zu einer Kommunikation mit der Kommunikationseinheit im Radiofrequenzbereich vorgesehen sein. Vorzugsweise ist die Informationseinheit zu einer Kommunikation mit der Kommunikationseinheit mittels zumindest einer Nahfeldkommunikationstechnik vorgesehen. Die Informationseinheit weist insbesondere zumindest eine Informationsempfangseinheit, die insbesondere zu einem Empfang zumindest einer Information und/oder zumindest eines Signals von der Kommunikationseinheit vorgesehen ist, und insbesondere zumindest eine Informationssendeeinheit, die insbesondere zu einer Übertragung zumindest einer Information und/oder zumindest eines Signals an die Kommunikationseinheit vorgesehen ist, auf. Insbesondere ist die Informationsempfangseinheit und/oder die Informationssendeeinheit speziell zu einer Kommunikation mittels Nahfeldkommunikationstechnik vorgesehen und/oder geeignet und/oder ausgelegt und/oder programmiert. Die Informationseinheit ist, insbesondere mittels der Informationsempfangseinheit und/oder der Informationssendeeinheit, insbesondere zu einer Kommunikation mit der Kommunikationseinheit vorgesehen. Insbesondere ist die Informationseinheit, insbesondere mittels der Informationsempfangseinheit und/oder der Informationssendeeinheit, insbesondere zu einem Austausch zumindest einer Information und/oder zumindest eines Signals mit der Kommunikationseinheit und/oder zu einer Interaktion mit der Kommunikationseinheit vorgesehen. Dadurch kann, insbesondere über kurze Strecken, insbesondere eine hohe Menge an Informationen und/oder Daten übertragen und/oder eine optimierte Kommunikation ermöglicht werden.

Beispielsweise könnten wenigstens ein Großteil der und vorteilhaft alle intrinsischen Aufstelleinheitenkenngrößen in der Informationsspeichereinheit speicherbar sein. Insbesondere könnte die Informationsspeichereinheit frei von werkseitig und/oder vordefiniert und/oder vorgegeben in der Informationsspeichereinheit gespeicherten intrinsischen Aufstelleinheitenkenngrößen sein. Vorzugsweise ist zumindest eine intrinsische Aufstelleinheitenkenngröße vordefiniert in der Informationsspeichereinheit gespeichert. Insbesondere könnte in der Informationsspeichereinheit zumindest eine intrinsische Aufstelleinheitenkenngröße zumindest einer, insbesondere gebräuchlichen und/oder weit verbreiteten Aufstelleinheit gespeichert sein, um insbesondere für eine Vielzahl an Kunden und/oder Bedienern bereits einen möglichst geringen Aufwand zu gewährleisten und/oder um insbesondere für gängige Aufstelleinheiten eine Eingabe zumindest einer intrinsischen Aufstelleinheitenkenngröße vermeiden zu können. Dadurch kann insbesondere bei einer erstmaligen Inbetriebnahme ein geringer Aufwand für einen Bediener und/oder ein hoher Bedienkomfort ermöglicht werden, da ein Bediener insbesondere auf bereits gespeicherte intrinsische Aufstelleinheitenkenngrößen zurückgreifen kann.

Beispielsweise könnten wenigstens ein Großteil der und vorteilhaft alle intrinsischen Aufstelleinheitenkenngrößen vordefiniert in der Informationsspeichereinheit gespeichert sein. Die Informationseinheit ist zu einem Empfang zumindest einer intrinsischen Aufstelleinheitenkenngröße von zumindest einer weiteren Einheit zum Zweck einer Speicherung der empfangenen Aufstelleinheitenkenngröße in der Informationsspeichereinheit vorgesehen. Insbesondere ist die Informationseinheit zu einem Empfang zumindest einer intrinsischen Aufstelleinheitenkenngröße mittels der Informationsempfangseinheit vorgesehen. Alternativ oder zusätzlich ist die Informationseinheit zu einem Empfang zumindest einer intrinsischen Aufstelleinheitenkenngröße durch zumindest eine Bedieneingabe mittels zumindest einer Bedienerschnittstelle vorgesehen. Die Bedienerschnittstelle könnte beispielsweise eine Kochfeldbedienerschnittstelle und/oder eine Informationsbedienerschnittstelle und/oder eine Mobilgerätebedienerschnittstelle sein. Dadurch kann insbesondere eine hohe Flexibilität erzielt werden, da einem Bediener insbesondere ermöglicht werden kann, für insbesondere beliebige Aufstelleinheiten zumindest eine Aufstelleinheitenkenngröße in der Informationsspeichereinheit zu speichern.

Ferner wird vorgeschlagen, dass zumindest eine als Geometriekenngröße ausgebildete Aufstelleinheitenkenngröße in der Informationsspeichereinheit speicherbar ist. Das Kochsystem weist insbesondere zumindest eine Steuereinheit auf, welche insbesondere dazu vorgesehen ist, zumindest eine als Geometriekenngröße ausgebildete Aufstelleinheitenkenngröße zu verarbeiten. Insbesondere ist die Steuereinheit dazu vorgesehen, in Abhängigkeit von der, insbesondere als Geometriekenngröße ausgebildeten Aufstelleinheitenkenngröße zumindest eine Heizzone für die Aufstelleinheit, welche insbesondere die Aufstelleinheitengröße aufweist, zu bilden. Die Steuereinheit ist insbesondere dazu vorgesehen, einer der Aufstelleinheit zuzuführende Heizleistung in Abhängigkeit von der Aufstelleinheitenkenngröße festzulegen und/oder zu ermitteln, und zwar insbesondere zum Zweck einer Beheizung der Aufstelleinheit mit einer Sollheizleistung. Die Sollheizleistung könnte insbesondere manuell, beispielsweise durch zumindest eine Bedieneingabe mittels der Bedienerschnittstelle, und/oder vordefiniert, beispielsweise durch ein automatisches Garprogamm, vorgegeben sein. Insbesondere ist die Sollheizleistung eine zu erzielende Heizleistung. Dadurch kann insbesondere eine optimale Beheizung einer die als Geometriekenngröße ausgebildete Aufstelleinheitenkenngröße aufweisenden Aufstelleinheit ermöglicht werden.

Zudem wird vorgeschlagen, dass zumindest eine als Tauglichkeitskenngröße ausgebildete Aufstelleinheitenkenngröße in der Informationsspeichereinheit speicherbar ist. Die Steuereinheit ist insbesondere dazu vorgesehen, zumindest eine als Tauglichkeitskenngröße ausgebildete Aufstelleinheitenkenngröße zu verarbeiten. Insbesondere ist die Steuereinheit dazu vorgesehen, in Abhängigkeit von der, insbesondere als Tauglichkeitskenngröße ausgebildeten Aufstelleinheitenkenngröße eine Beheizung der Aufstelleinheit, welche insbesondere die Aufstelleinheitengröße aufweist, freizugeben und/oder zu blockieren. Dadurch kann insbesondere jede Aufstelleinheit, und zwar insbesondere unabhängig von der als Tauglichkeitskenngröße ausgebildeten Aufstelleinheitenkenngröße, optimal beheizt werden, wodurch insbesondere optimale Garergebnisse und/oder eine hohe Zufriedenheit bei einem Bediener erzielt werden können.

Eine besonders hohe Flexibilität kann insbesondere erreicht werden durch ein Kochsystem, insbesondere durch das Kochsystem, mit zumindest einer erfindungsgemäßen Kochvorrichtung, mit der Aufstelleinheit, an welcher die Informationseinheit in wenigstens einem Betriebszustand angeordnet ist, und/oder mit der Kommunikationseinheit. Insbesondere weist das Kochsystem die erfindungsgemäße Kochvorrichtung auf. Das Kochsystem könnte, insbesondere zusätzlich zu der Kochvorrichtung, insbesondere die Aufstelleinheit, an welcher die Informationseinheit in wenigstens einem Betriebszustand insbesondere angeordnet sein könnte, und/oder die Kommunikationseinheit aufweisen. Beispielsweise könnte das Kochsystem, insbesondere zusätzlich zu der Kochvorrichtung, zumindest ein Kochfeld und/oder zumindest eine Aufstellplatte aufweisen. Die Aufstellplatte könnte beispielsweise Teil des Kochfelds sein. Alternativ oder zusätzlich könnte das Kochfeld in wenigstens einem Betriebszustand wenigstens zu einem Großteil und vorteilhaft vollständig unterhalb der Aufstellplatte angeordnet sein.

Die Kommunikationseinheit könnte beispielsweise wenigstens zu einem Großteil in dem Kochfeld integriert sein. Alternativ oder zusätzlich könnte die Kommunikationseinheit insbesondere wenigstens zu einem Großteil in zumindest einem Mobilgerät integriert sein. Vorzugsweise ist die Kommunikationseinheit in wenigstens einem Betriebszustand an der Aufstelleinheit außerhalb des Heizbereichs der Aufstelleinheit angeordnet und insbesondere als ein Kontaktmodul ausgebildet und/oder wenigstens zu einem Großteil in zumindest einem Kontaktmodul integriert. Dadurch kann insbesondere eine langlebige Ausgestaltung und/oder eine optimale Zugänglichkeit der Kommunikationseinheit ermöglicht werden, wodurch insbesondere ein hoher Bedienkomfort bereitgestellt werden kann.

Weiterhin wird vorgeschlagen, dass die Kommunikationseinheit zu einer werkzeuglos lösbaren Anordnung an der Aufstelleinheit vorgesehen ist. Insbesondere ist die Kommunikationseinheit zu einer Anordnung zumindest an einer Seitenwand der Aufstelleinheit vorgesehen. Die Kommunikationseinheit weist insbesondere an zumindest einer der Seitenwand in wenigstens einem Betriebszustand zugewandten Oberfläche wenigstens abschnittsweise eine konkavförmige Gestalt auf. Insbesondere ist die Kommunikationseinheit zu einer Kommunikation mit der Informationseinheit mittels zumindest einer Nahfeldkommunikationstechnik vorgesehen. Dadurch kann insbesondere eine hohe Flexibilität erzielt werden, da die Kommunikationseinheit insbesondere an einer insbesondere beliebigen Stelle der Aufstelleinheit außerhalb des Heizbereichs der Aufstelleinheit angeordnet werden kann.

Eine besonders hohe Flexibilität kann insbesondere erreicht werden durch ein Verfahren zu einem Betrieb einer erfindungsgemäßen Kochvorrichtung und/oder eines erfindungsgemäßen Kochsystems, bei welchem insbesondere in wenigstens einem Betriebszustand zumindest eine intrinsische Aufstelleinheitenkenngröße elektronisch bereitgestellt wird.

Die Kochvorrichtung soll hierbei nicht auf die oben beschriebene Anwendung und Ausführungsform beschränkt sein. Insbesondere kann die Kochvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: ein Kochsystem mit einer Kochvorrichtung, mit einem Kochfeld, mit einer Aufstellplatte und mit einer Aufstelleinheit, an welcher eine Informationseinheit der Kochvorrichtung angeordnet ist, in einer schematischen Draufsicht,
- Fig. 2: das Kochsystem mit der Kochvorrichtung, mit der Aufstelleinheit, mit einer Kommunikationseinheit und mit einer weiteren Einheit in einer schematischen perspektivischen Darstellung,
- Fig. 3: das Kochsystem mit der Kochvorrichtung, mit dem Kochfeld, mit der Aufstellplatte, mit der Aufstelleinheit und mit der Kommunikationseinheit in einer schematischen Schnittdarstellung in einer Querschnittsebene, die senkrecht zu einer Haupterstreckungsebene der Aufstellplatte ausgerichtet ist,
- Fig. 4: das Kochsystem mit der Kochvorrichtung, mit dem Kochfeld, mit der Aufstellplatte, mit der Aufstelleinheit und mit der Kommunikationseinheit in einer schematischen Schnittdarstellung entlang der Linie IV-IV in Figur 3 und damit insbesondere in einer Querschnittsebene, die parallel zu einer Haupterstreckungsebene der Aufstellplatte ausgerichtet ist, und
- Fig. 5: ein Diagramm, welches Verfahrensschritte eines Verfahrens zu einem Betrieb des Kochsystems und der Kochvorrichtung darstellt, in einer schematischen Darstellung.

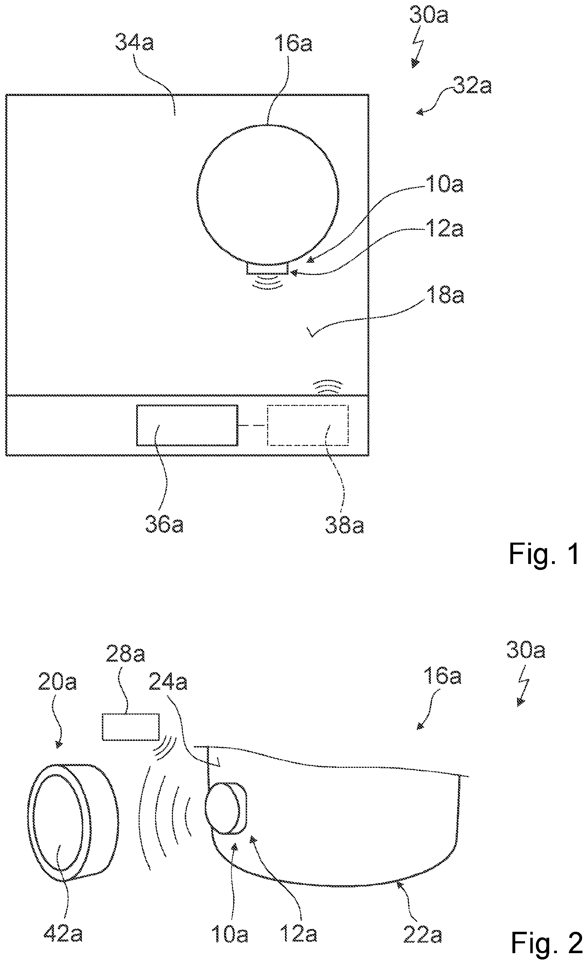

Figur 1 zeigt ein Kochsystem 30a, welches als ein Induktionskochsystem ausgebildet ist, mit einem Kochfeld 32a, welches als ein Induktionskochfeld ausgebildet ist.

Das Kochsystem 30a weist eine Aufstellplatte 34a auf. In einem montierten Zustand bildet die Aufstellplatte 34a eine Sichtfläche aus, welche in einem montierten Zustand insbesondere einem Bediener zugewandt angeordnet ist. Die Aufstellplatte 34a ist zu einem Aufstellen einer Aufstelleinheit 16a zum Zweck einer Beheizung der Aufstelleinheit 16a vorgesehen. Im vorliegenden Ausführungsbeispiel ist die Aufstellplatte 34a als eine Kochfeldplatte ausgebildet.

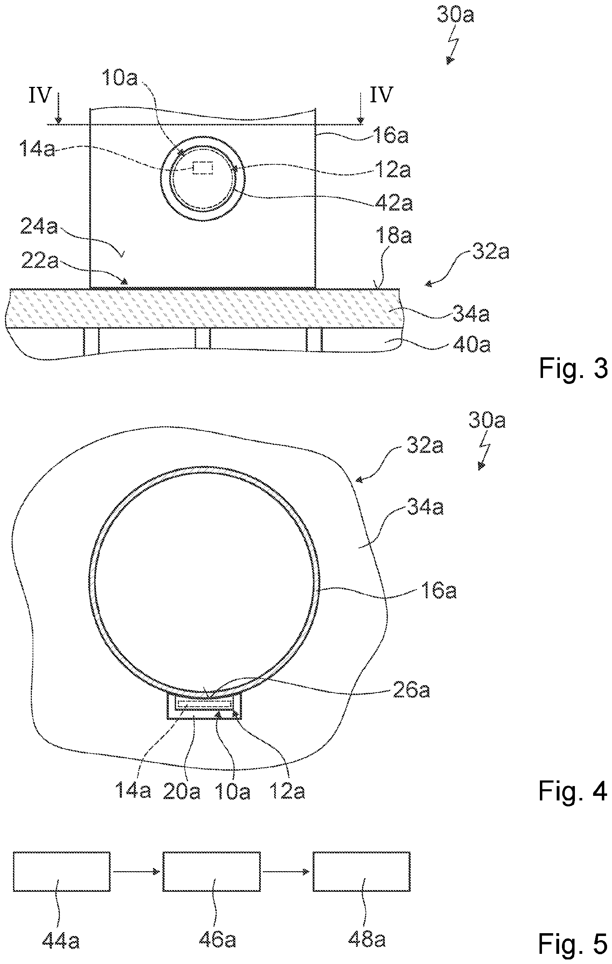

Die Aufstellplatte 34a definiert eine Kochfläche 18a. Die Kochfläche 18a ist als eine einem Bediener zugewandte Oberfläche der Aufstellplatte 34a ausgebildet, unterhalb welcher in einem Betriebszustand insbesondere zumindest eine Kochfeldheizeinheit 40a angeordnet ist (vgl. Figur 3).

Das Kochsystem 30a weist die Aufstelleinheit 16a auf. Die Aufstelleinheit 16a ist zu einem Aufstellen auf der Kochfläche 18a zum Zweck einer Beheizung der Aufstelleinheit 16a vorgesehen.

Das Kochsystem 30a weist zumindest eine Kochfeldheizeinheit 40a auf. Im vorliegenden Ausführungsbeispiel weist das Kochsystem 30a eine Vielzahl an Kochfeldheizeinheiten 40a auf. Alternativ könnte das Kochsystem 30a beispielsweise eine kleinere Anzahl an Kochfeldheizeinheiten 40a aufweisen, wie beispielsweise genau eine Kochfeldheizeinheit 40a und/oder zumindest zwei, insbesondere zumindest vier, vorteilhaft zumindest acht, besonders vorteilhaft zumindest zwölf und vorzugsweise mehrere Kochfeldheizeinheiten 40a. Die Kochfeldheizeinheiten 40a könnten beispielsweise in Form einer Matrix angeordnet sein. Im Folgenden wird lediglich eine der Kochfeldheizeinheiten 40a beschrieben.

Die Kochfeldheizeinheit 40a ist in einer Einbaulage unterhalb der Aufstellplatte 34a angeordnet. Die Kochfeldheizeinheit 40a ist dazu vorgesehen, zumindest eine auf der Aufstellplatte 34a oberhalb der Kochfeldheizeinheit 40a aufgestellte Aufstelleinheit 16a zu erhitzen. Die Kochfeldheizeinheit 40a ist als Induktionskochfeldheizeinheit ausgebildet. In dem Betriebszustand ist die Kochfeldheizeinheit 40a unterhalb der Kochfläche 18a angeordnet. Die Kochfeldheizeinheit 40a des Kochsystems 30a ist Teil des Kochfelds 32a. Das Kochfeld 32a weist die Kochfeldheizeinheit 40a des Kochsystems 30a auf.

Das Kochsystem 30a weist eine Kochfeldbedienerschnittstelle 36a auf. Die Kochfeldbedienerschnittstelle 36a ist zu einer Eingabe und/oder Auswahl von Betriebsparametern vorgesehen, wie beispielsweise einer Heizleistung und/oder einer Heizleistungsdichte und/oder einer Heizzone. Die Kochfeldbedienerschnittstelle 36a ist zu einer Ausgabe eines Werts eines Betriebsparameters an einen Bediener vorgesehen.

Das Kochsystem 30a weist eine Kochfeldsteuereinheit 38a auf. In dem Betriebszustand steuert und/oder regelt die Kochfeldsteuereinheit 38a eine Kochfeldhauptfunktion. Die Kochfeldsteuereinheit 38a ist dazu vorgesehen, in Abhängigkeit von mittels der Kochfeldbedienerschnittstelle 36a eingegebenen Betriebsparametern, Aktionen auszuführen und/oder Einstellungen zu verändern. Die Kochfeldsteuereinheit 38a regelt in dem Betriebszustand eine Energiezufuhr zu der Kochfeldheizeinheit 40a. Die Kochfeldsteuereinheit 38a des Kochsystems 30a ist im vorliegenden Ausführungsbeispiel Teil des Kochfelds 28a. Das Kochfeld 28a weist die Kochfeldsteuereinheit 38a des Kochsystems 30a auf.

Das Kochsystem 30a weist eine Kochvorrichtung 10a auf. Die Kochvorrichtung 10a ist als eine Induktionskochvorrichtung ausgebildet. In einem Betriebszustand ist die Kochvorrichtung 10a an der Aufstelleinheit 16a angeordnet.

Die Kochvorrichtung 10a weist eine Informationseinheit 12a auf. In einem Betriebszustand ist die Informationseinheit 12a der Kochvorrichtung 10a an der Aufstelleinheit 16a angeordnet, und zwar insbesondere werkzeuglos lösbar. Die Informationseinheit 12a ist zu einer werkzeuglos lösbaren Anordnung an der Aufstelleinheit 16a vorgesehen.

Die Informationseinheit 12a weist eine Informationsspeichereinheit 14a auf. Die Informationsspeichereinheit 14a ist zu einer Speicherung zumindest einer Information über die Aufstelleinheit 16a vorgesehen. In der Informationsspeichereinheit 14a ist zumindest eine intrinsische Aufstelleinheitenkenngröße der Aufstelleinheit 16a speicherbar.

Zum Zweck einer Kommunikation mit einer Kommunikationseinheit 20a ist die Informationseinheit 12a zu einer Anordnung an der Aufstelleinheit 16a außerhalb eines Heizbereichs 22a der Aufstelleinheit 16a vorgesehen. Der Heizbereich 22a der Aufstelleinheit 16a ist ein Boden der Aufstelleinheit 16a. In dem Betriebszustand kontaktiert die Aufstelleinheit 16a mittels des Bodens und/oder mittels des Heizbereichs 22a die Kochfläche 18a zumindest abschnittsweise.

Die Informationseinheit 12a ist zum Zweck einer Kommunikation mit der Kommunikationseinheit 20a beabstandet zu dem Heizbereich 22a der Aufstelleinheit 16a angeordnet, und zwar insbesondere zumindest bezüglich einer senkrecht zu einer Haupterstreckungsrichtung der Aufstellplatte 34a ausgerichteten Richtung. Bei einer senkrechten Betrachtung auf eine Haupterstreckungsebene der Aufstellplatte 34a ist die Informationseinheit 12a seitlich neben einem von dem Heizbereich 22a und/oder von dem Boden aufgespannten Bereich angeordnet.

Die Informationseinheit 12a ist zu einer Anordnung an einer Seitenwand 24a der Aufstelleinheit 16a vorgesehen. In dem Betriebszustand ist die Informationseinheit 12a an der Seitenwand 24a der Aufstelleinheit 16a angeordnet, und zwar insbesondere werkzeuglos lösbar. Die Informationseinheit 12a ist in dem Betriebszustand an der Aufstelleinheit 16a angeordnet.

Zu der Anordnung an der Seitenwand 24a der Aufstelleinheit 16a weist die Informationseinheit 12a an einer der Seitenwand 24 in dem Betriebszustand zugewandten Oberfläche 26a abschnittsweise eine konkavförmige Gestalt auf (vgl. Figur 4). In dem Betriebszustand ist die Kommunikationseinheit 20a in einem Nahbereich der Informationseinheit 12a angeordnet.

Das Kochsystem 30a weist die Kommunikationseinheit 20a auf. In dem Betriebszustand umgibt die Kommunikationseinheit 20a die Informationseinheit 12a zu einem Großteil. Die Kommunikationseinheit 20a ist in dem Betriebszustand an der Aufstelleinheit 16a außerhalb des Heizbereichs 22a der Aufstelleinheit 16a angeordnet. Im vorliegenden Ausführungsbeispiel ist die Kommunikationseinheit 20a in dem Betriebszustand an der Seitenwand 24a der Aufstelleinheit 16a angeordnet.

Zu der Anordnung an der Seitenwand 24a der Aufstelleinheit 16a weist die Kommunikationseinheit 20a an einer der Seitenwand 24a in dem Betriebszustand zugewandten Oberfläche abschnittsweise eine konkavförmige Gestalt auf (vgl. Figur 4). Die Kommunikationseinheit 20a ist in dem Betriebszustand werkzeuglos lösbar an der Aufstelleinheit 16a angeordnet. In dem Betriebszustand ist die Kommunikationseinheit 20a zu einer werkzeuglos lösbaren Anordnung an der Aufstelleinheit 16a vorgesehen.

Die Kommunikationseinheit 20a ist zu einer Kommunikation mit der Informationseinheit 12a vorgesehen. In dem Betriebszustand kommuniziert die Kommunikationseinheit 20a mit der Informationseinheit 12a. Die Kommunikationseinheit 20a und die Informationseinheit 12a kommunizieren in dem Betriebszustand mittels einer Nahfeldkommunikationstechnik.

Die Informationseinheit 12a ist zu einer Kommunikation mit der Kommunikationseinheit 20a mittels einer Nahfeldkommunikationstechnik vorgesehen. In dem Betriebszustand überträgt die Informationseinheit 12a zumindest eine in der Informationsspeichereinheit 14a gespeicherte Aufstelleinheitenkenngröße der Aufstelleinheit 16a an die Kommunikationseinheit 20a.

Die Kommunikationseinheit 20a überträgt in dem Betriebszustand zumindest eine Aufstelleinheitenkenngröße der Aufstelleinheit 16a an die Informationseinheit 12a, und zwar insbesondere zum Zweck einer Speicherung der Aufstelleinheitenkenngröße der Aufstelleinheit 16a in der Informationsspeichereinheit 14a der Informationseinheit 12a.

Die Kommunikationseinheit 20a weist eine Bedienerschnittstelle 42a auf. Die Bedienerschnittstelle 42a ist zu einer Eingabe und/oder Auswahl zumindest einer Aufstelleinheitenkenngröße der Aufstelleinheit 16a vorgesehen. In dem Betriebszustand überträgt die Kommunikationseinheit 20a zumindest eine mittels der Bedienerschnittstelle 42 eingegebene und/oder ausgewählte Aufstelleinheitenkenngröße der Aufstelleinheit 16a an die Informationseinheit 12a, insbesondere zum Zweck einer Speicherung der Aufstelleinheitenkenngröße der Aufstelleinheit 16a in der Informationsspeichereinheit 14a der Informationseinheit 12a.

In der Informationsspeichereinheit 14a ist im vorliegenden Ausführungsbeispiel zumindest eine intrinsische Aufstelleinheitenkenngröße vordefiniert gespeichert. Insbesondere zusätzlich zu der in der Informationsspeichereinheit 14a vordefiniert gespeicherten intrinsischen Aufstelleinheitenkenngröße, ist die Informationseinheit 12a zu einem Empfang zumindest einer intrinsischen Aufstelleinheitenkenngröße von zumindest einer weiteren Einheit 28a zum Zweck einer Speicherung der empfangenen Aufstelleinheitenkenngröße in der Informationsspeichereinheit 14a vorgesehen.

Das Kochsystem 30a weist die weitere Einheit 28a auf. Im vorliegenden Ausführungsbeispiel ist die weitere Einheit 28a ein Mobilgerät. Das Mobilgerät ist im vorliegenden Ausführungsbeispiel ein Handy. Alternativ oder zusätzlich könnte die weitere Einheit 28a insbesondere wenigstens teilweise einstückig mit der Kommunikationseinheit 20a und/oder wenigstens teilweise einstückig mit zumindest einem, insbesondere von einem Handy verschiedenen Mobilgerät und/oder mit zumindest einem Netzwerk ausgebildet sein (nicht dargestellt).

In der Informationsspeichereinheit 14a ist zumindest eine als Geometriekenngröße ausgebildete Aufstelleinheitenkenngröße speicherbar. In dem Betriebszustand ist zumindest eine als Geometriekenngröße ausgebildete Aufstelleinheitenkenngröße in der Informationsspeichereinheit 14a gespeichert.

Insbesondere zusätzlich zu der als Geometriekenngröße ausgebildeten Aufstelleinheitenkenngröße, ist zumindest eine als Tauglichkeitskenngröße ausgebildete Aufstelleinheitenkenngröße in der Informationsspeichereinheit 14a speicherbar. In dem Betriebszustand ist zumindest eine als Tauglichkeitskenngröße ausgebildete Aufstelleinheitenkenngröße in der Informationsspeichereinheit 14a gespeichert.

In einem Verfahren zu einem Betrieb der Kochvorrichtung 10a und/oder des Kochsystems 30a, insbesondere der Kochvorrichtung 10a und des Kochsystems 30a, wird in einem Speicherungsschritt 44a zumindest eine intrinsische Aufstelleinheitenkenngröße elektronisch gespeichert, und zwar insbesondere in der Informationsspeichereinheit 14a der Informationseinheit 12a (vgl. Figur 5).

Zumindest eine intrinsische Aufstelleinheitenkenngröße wird insbesondere zeitlich vor dem Speicherungsschritt 44a in der Informationsspeichereinheit 14a der Informationseinheit 12a gespeichert, und zwar insbesondere werksseitig und/oder von einem Monteur und/oder von einem Techniker.

In einem Kommunikationsschritt 46a wird zumindest eine in der Informationsspeichereinheit 14a der Informationseinheit 12a gespeicherte intrinsische Aufstelleinheitenkenngröße übertragen, und zwar insbesondere von der Informationseinheit 12a an die Kommunikationseinheit 20a. In einem Bereitstellungsschritt 48a wird zumindest eine intrinsische Aufstelleinheitenkenngröße elektronisch bereitgestellt, und zwar insbesondere von der Informationseinheit 12a and die Kommunikationseinheit 20a.

### Bezugszeichen

- 10: Kochvorrichtung
- 12: Informationseinheit
- 14: Informationsspeichereinheit
- 16: Aufstelleinheit
- 18: Kochfläche
- 20: Kommunikationseinheit
- 22: Heizbereich
- 24: Seitenwand
- 26: Oberfläche
- 28: Weitere Einheit
- 30: Kochsystem
- 32: Kochfeld
- 34: Aufstellplatte
- 36: Kochfeldbedienerschnittstelle
- 38: Kochfeldsteuereinheit
- 40: Kochfeldheizeinheit
- 42: Bedienerschnittstelle
- 44: Speicherungsschritt
- 46: Kommunikationsschritt
- 48: Bereitstellungsschritt

## Patentansprüche

1. Kochvorrichtung, insbesondere Induktionskochvorrichtung, mit zumindest einer Informationseinheit (12a), welche zumindest eine Informationsspeichereinheit (14a) aufweist, in welcher zumindest eine intrinsische Aufstelleinheitenkenngröße zumindest einer Aufstelleinheit (16a), die zu einem Aufstellen auf zumindest einer Kochfläche (18a) zum Zweck einer Beheizung vorgesehen ist, speicherbar ist, wobei die Informationseinheit (12a) zum Zweck einer Kommunikation mit zumindest einer Kommunikationseinheit (20a) zu einer Anordnung an der Aufstelleinheit (16a) außerhalb eines Heizbereichs (22a) der Aufstelleinheit (16a) vorgesehen ist, **dadurch gekennzeichnet, dass** die Informationseinheit (12a) zu einer Anordnung zumindest an einer Seitenwand (24a) der Aufstelleinheit (16a) vorgesehen ist, und wobei die Informationseinheit (12a) zu einem Empfang zumindest einer intrinsischen Aufstelleinheitenkenngröße von zumindest einer weiteren Einheit (28a) zum Zweck einer Speicherung der empfangenen Aufstelleinheitenkenngröße in der Informationsspeichereinheit (14a) vorgesehen ist.

2. Kochvorrichtung nach Anspruch 1, **dadurch gekennzeichnet, dass** die Informationseinheit (12a) zu einer werkzeuglos lösbaren Anordnung an der Aufstelleinheit (16a) vorgesehen ist.

3. Kochvorrichtung nach Anspruch 1 oder 2, **dadurch gekennzeichnet, dass** die Informationseinheit (12a) an zumindest einer der Seitenwand (24a) in wenigstens einem Betriebszustand zugewandten Oberfläche (26a) wenigstens abschnittsweise eine konkavförmige Gestalt aufweist.

4. Kochvorrichtung nach einem der vorhergehenden Ansprüche, **dadurch gekennzeichnet, dass** die Informationseinheit (12a) zu einer Kommunikation mit der Kommunikationseinheit (20a) mittels zumindest einer Nahfeldkommunikationstechnik vorgesehen ist.

5. Kochvorrichtung nach einem der vorhergehenden Ansprüche, **dadurch gekennzeichnet, dass** zumindest eine intrinsische Aufstelleinheitenkenngröße vordefiniert in der Informationsspeichereinheit (14a) gespeichert ist.

6. Kochvorrichtung nach einem der vorhergehenden Ansprüche, **dadurch gekennzeichnet, dass** zumindest eine als Geometriekenngröße ausgebildete Aufstelleinheitenkenngröße in der Informationsspeichereinheit (14a) speicherbar ist.

7. Kochvorrichtung nach einem der vorhergehenden Ansprüche, **dadurch gekennzeichnet, dass** zumindest eine als Tauglichkeitskenngröße ausgebildete Aufstelleinheitenkenngröße in der Informationsspeichereinheit (14a) speicherbar ist.

8. Kochsystem mit zumindest einer Kochvorrichtung (10a) nach einem der vorhergehenden Ansprüche, mit der Aufstelleinheit (16a), an welcher die Informationseinheit (12a) in wenigstens einem Betriebszustand angeordnet ist, und/oder mit der Kommunikationseinheit (20a).

9. Kochsystem nach Anspruch 8, **dadurch gekennzeichnet, dass** die Kommunikationseinheit (20a) in wenigstens einem Betriebszustand an der Aufstelleinheit (16a) außerhalb des Heizbereichs (22a) der Aufstelleinheit (16a) angeordnet ist.

10. Kochsystem nach Anspruch 8 oder 9, **dadurch gekennzeichnet, dass** die Kommunikationseinheit (20a) zu einer werkzeuglos lösbaren Anordnung an der Aufstelleinheit (16a) vorgesehen ist.

## Claims

1. Cooking device, in particular an induction cooking device, comprising at least one information unit (12a) that has at least one information storage unit (14a) in which at least one intrinsic placement unit characteristic of at least one placement unit (16a) provided for placing on at least one cooking surface (18a) for the purposes of heating can be stored, wherein the information unit (12a) is designed to be arranged on the placement unit (16a) outside of a heating region (22a) of the placement unit (16a) for the purpose of communicating with at least one communication unit (20a), **characterised in that** the information unit (12a) is provided for an arrangement at least on a side wall (24a) of the placement unit (16a), and wherein the information unit (12a) is provided for receiving at least one intrinsic placement unit characteristic from at least one further unit (28a) for the purpose of storing the received placement unit characteristic in the information storage unit (14a).

2. Cooking device according to claim 1, **characterised in that** the information unit (12a) is provided for an arrangement on the placement unit (16a) which can be released without the use of tools.

3. Cooking device according to claim 1 or 2, **characterised in that** in at least one operating state the information unit (12a) has a concave design at least in some portions on at least a surface (26a) facing the side wall (24a).

4. Cooking device according to one of the preceding claims, **characterised in that** the information unit (12a) is provided for a communication with the communication unit (20a) by means of at least one near field communication technology.

5. Cooking device according to one of the preceding claims, **characterised in that** at least one intrinsic placement unit characteristic is stored in a predefined manner in the information storage unit (14a).

6. Cooking device according to one of the preceding claims, **characterised in that** at least one placement unit characteristic configured as a geometric characteristic is storable in the information storage unit (14a).

7. Cooking device according to one of the preceding claims, **characterised in that** at least one placement unit characteristic configured as a suitability characteristic is storable in the information storage unit (14a).

8. Cooking system comprising at least one cooking device (10a) according to one of the preceding claims, with the placement unit (16a) on which the information unit (12a) is arranged in at least one operating state, and/or with the communication unit (20a).

9. Cooking system according to claim 8, **characterised in that** in at least one operating state the communication unit (20a) is arranged on the placement unit (16a) outside of the heating region (22a) of the placement unit (16a).

10. Cooking system according to claim 8 or 9, **characterised in that** the communication unit (20a) is provided for an arrangement on the placement unit (16a) which can be released without the use of tools.

## Revendications

1. Dispositif de cuisson, en particulier dispositif de cuisson à induction, comprenant au moins une unité d'informations (12a), qui comprend au moins une unité d'enregistrement d'informations (14a), dans laquelle au moins une grandeur caractéristique intrinsèque d'objet à poser d'au moins un objet à poser (16a), qui est prévu pour être posé sur au moins une surface de cuisson (18a) en vue d'un chauffage, peut être enregistrée,
dans lequel l'unité d'informations (12a), en vue d'une communication avec au moins une unité de communication (20a), est prévue pour être agencée sur l'objet à poser (16a) en dehors d'une zone de chauffe (22a) de l'objet à poser (16a),
**caractérisé en ce que** l'unité d'informations (12a) est configurée pour être disposée au moins sur une paroi latérale (24a) de l'objet à poser (16a), et
dans lequel l'unité d'informations (12a) est configurée pour recevoir au moins une grandeur caractéristique intrinsèque d'objet à poser d'au moins une autre unité (28a) en vue d'un enregistrement de la grandeur caractéristique d'objet à poser reçue dans l'unité d'enregistrement d'informations (14a).

2. Dispositif de cuisson selon la revendication 1, **caractérisé en ce que** l'unité d'informations (12a) est configurée pour être disposée de façon détachable sans outil sur l'objet à poser (16a).

3. Dispositif de cuisson selon la revendication 1 ou 2, **caractérisé en ce que** l'unité d'informations (12a) comprend au moins par sections une forme concave sur au moins une surface (26a) orientée vers la paroi latérale (24a) dans au moins un état de fonctionnement.

4. Dispositif de cuisson selon l'une des revendications précédentes, **caractérisé en ce que** l'unité d'informations (12a) est configurée pour communiquer avec l'unité de communication (20a) au moyen d'au moins une technique de communication à champ proche.

5. Dispositif de cuisson selon l'une des revendications précédentes, **caractérisé en ce qu'**au moins une grandeur caractéristique d'objet à poser intrinsèque est enregistrée de façon prédéfinie dans l'unité d'enregistrement d'informations (14a).

6. Dispositif de cuisson selon l'une des revendications précédentes, **caractérisé en ce que** l'au moins une grandeur caractéristique d'objet à poser constituée sous forme d'une grandeur caractéristique géométrique peut être enregistrée dans l'unité d'enregistrement d'informations (14a).

7. Dispositif de cuisson selon l'une des revendications précédentes, **caractérisé en ce que** l'au moins une grandeur caractéristique d'objet à poser constituée sous forme d'une grandeur caractéristique d'aptitude peut être enregistrée dans l'unité d'enregistrement d'informations (14a).

8. Système de cuisson comprenant au moins un dispositif de cuisson (10a) selon l'une des revendications précédentes, comprenant l'objet à poser (16a), sur lequel l'unité d'informations (12a) est disposée dans au moins un état de fonctionnement, et/ou comprenant l'unité de communication (20a).

9. Système de cuisson selon la revendication 8, **caractérisé en ce que** l'unité de communication (20a) est disposée, dans au moins un état de fonctionnement, sur l'objet à poser (16a) à l'extérieur de la zone de chauffe (22a) de l'objet à poser (16a).

10. Système de cuisson selon la revendication 8 ou 9, **caractérisé en ce que** l'unité de communication (20a) est configurée pour être disposée sur l'objet à poser (16a) de façon à pouvoir en être détachée sans outil.
